Europäisches Patentamt

(19) European Patent Office  (11) Numéro de publication: **0 231 710**
Office européen des brevets  **B1**

(12)  **FASCICULE DE BREVET EUROPEEN**

(45) Date de publication du fascicule du brevet:  (51) Int. Cl.⁴: **G21C 7/26**
21.03.90

(21) Numéro de dépôt: **86402957.4**

(22) Date de dépôt: **29.12.86**

(54) Procédé d'exploitation d'un réacteur nucléaire et réacteur nucléaire à variation du spectre neutronique utilisant des grappes de crayons de déplacement d'eau.

(30) Priorité: **30.12.85 FR 8519404**

(43) Date de publication de la demande:
**12.08.87 Bulletin 87/33**

(45) Mention de la délivrance du brevet:
**21.03.90 Bulletin 90/12**

(84) Etats contractants désignés:
**BE CH DE ES GB IT LI NL SE**

(56) Documents cités:
**EP-A- 0 108 020**
**EP-A- 0 151 969**
**US-A- 3 309 323**
**US-A- 3 514 412**

(73) Titulaire: **FRAMATOME, Tour Fiat 1, Place de la Coupole, F-92400 Courbevoie(FR)**

(72) Inventeur: **Leroy, Claude, 51, bis Grande Rue, F-91190 Lardy(FR)**
Inventeur: **Millot, Jean-Paul, 1, Allée des Roitelets, F-78340 Elancourt(FR)**

(74) Mandataire: **Fort, Jacques et al, CABINET PLASSERAUD 84, rue d'Amsterdam, F-75009 Paris(FR)**

ACTORUM AG

## Description

L'invention concerne les réacteurs nucléaires modérés et refroidis par de l'eau légère et, plus particulièrement, les réacteurs exploités suivant un procédé qui comporte, avant une phase de fonctionnement avec un spectre d'énergie des neutrons qui est sensiblement thermique, une première phase avec un spectre d'énergie des neutrons décalé vers les énergies élevées, alors que la réactivité du combustible nucléaire utilisé est importante.

Le document FR-A 2 535 509 décrit un procédé d'exploitation d'un réacteur nucléaire modéré et refroidi par de l'eau légère comportant un cœur constitué par des assemblages combustibles plongés dans l'eau légère dont on effectue le remplacement au moins partiel à des intervalles de temps déterminés, correspondant à des cycles de fonctionnement du réacteur, dans lequel on introduit des barres de variation du spectre d'énergie des neutrons à l'intérieur du cœur, barres constituées en un matériau absorbant les neutrons à faible énergie, dans une première phase du cycle de façon à diminuer le rapport entre le volume de modérateur et le volume de matériau fissile dans le cœur et à déplacer le spectre d'énergie des neutrons vers les hautes énergies, et dans lequel on extrait les barres de déplacement du spectre dans une seconde phase du cycle.

Le matériau des barres de variation du spectre contient au moins un composant fertile susceptible de se transformer en matériau fissile sous l'effet du bombardement neutronique. Suivant le document FR-A 2 535 509 ci-dessus mentionné, ce matériau peut contenir de l'oxyde d'uranium appauvri en uranium 235.

La capture des neutrons par l'uranium 238 constituant le composant fertile donne naissance à du plutonium qui peut ensuite être extrait par retraitement des barres de variation du spectre. Etant donné que ces barres ne séjournent dans le cœur du réacteur que pendant la première phase du cycle et sont ensuite extraites dans les internes supérieurs du cœur, leur irradiation moyenne lors du déchargement, à l'issue d'un cycle de fonctionnement, est beaucoup plus faible que celle des assemblages combustibles. En conséquence, le plutonium contenu dans ces barres se révèle d'une qualité nettement supérieure à celle du plutonium provenant du combustible. Cela se traduit par une proportion de Pu239 supérieure et par une proportion plus faible d'isotopes dits de "bout de chaîne" (Pu241 et Pu242). Le procédé d'exploitation suivant le brevet principal est donc susceptible de donner naissance à un risque de prolifération, du fait que la construction d'une usine d'extraction par voie chimique pose beaucoup moins de problèmes techniques et économiques que celle d'une usine de séparation isotopique.

L'utilisation de thorium comme matériau fertile, au lieu d'uranium appauvri, soulève sensiblement les mêmes problèmes, puisque le thorium 232 produit, par absorption neutronique, de l'uranium 233 qui est également fissile et peut être séparé du thorium par extraction chimique.

L'invention vise notamment à réduire le risque de prolifération que présente l'exploitation des réacteurs à variation de spectre utilisant des barres de matériau fertile pour réduire la quantité d'eau modératrice dans le cœur lors d'une première phase du cycle de fonctionnement sans en amoindrir les performances neutroniques.

Dans ce but, l'invention propose notamment un procédé du genre ci-dessus défini dans lequel le matériau fertile des barres de variation de spectre comprend un mélange intime de thorium et d'uranium appauvri avec une teneur en uranium par rapport à l'ensemble de l'uranium et du thorium comprise entre 5 et 20% en poids.

On connaît également (EP-A 151 969) une grappe qui contient du combustible (uranium naturel appauvri ou enrichi) susceptible de provoquer un durcissement du spectre. Mais il s'agit d'une grappe de bouchons.

Le brevet US-A 3 514 412 enseigne d'utiliser un matériau combustible constitué d'un produit fertile, tel que l'oxyde de thorium, sous forme de microsphères imprégnées de matériau fissile tel que U233 ou U235.

Le brevet US-A 3 309 323 décrit un matériau combustible constitué d'oxyde de thorium et d'oxyde d'uranium en combinaison avec un oxyde de magnésium ; la teneur d'oxyde d'uranium est inférieure à 8% en poids.

Mais, il n'est pas question, dans ces documents, de résoudre le problème que se sont posés les inventeurs. Le fait que le brevet US-A 3 514 412 présente U233 et U235 comme équivalents le montre bien: en effet, le Thorium donne naissance à U233, de sorte qu'il n'y aurait aucune difficulté à extraire ce dernier du combustible neuf ou irradié.

Dans la pratique, on utilisera fréquemment un uranium appauvri provenant du retraitement du combustible irradié, ayant une teneur résiduelle en U235 de 0,2%, alors que le matériau contenu dans les assemblages combustible est de l'uranium enrichi à 4,2% en poids d'uranium 235. Une partie de l'uranium 235 peut être remplacée par du plutonium, ce qui permet d'utiliser un uranium ayant une teneur en U235 peu supérieure à sa teneur naturelle. L'uranium et le thorium doivent être intimement mélangés dans les barres pour éviter qu'il ne soit possible de les séparer physiquement, ce qui peut être fait en utilisant des pastilles frittées d'oxydes d'uranium et de thorium.

Du fait du mélange du thorium et de l'uranium 238, il n'est plus possible, à partir du matériau fertile iradié, d'isoler par voie chimique l'uranium 233 fissile issu du thorium. Et, du fait que l'auto-protection du plutonium 239 dans les barres de variation de spectre sera beaucoup plus faible lorsque la teneur en uranium de ces barres est faible, le plutonium obtenu pour les taux d'irradiation habituels s'en trouvera dégradé par une proportion accrue de Pu240 et Pu242. En général, il suffira de réduire la teneur en uranium appauvri à 10% environ. Si cependant on souhaite dégrader encore davantage la qualité du plutonium, on peut descendre à des teneurs plus faibles, jusqu'à 5% par exemple ou même au-delà. Pour une teneur de 5%, la proportion d'uranium 233 par rapport à l'uranium 238 résiduel reste suffisamment faible pour que sa qualité ne pose pas de problèmes de prolifération.

L'invention propose également un réacteur permettant de mettre en œuvre le procédé qui vient d'être défini, caractérisé en ce que les barres de variation de spectre sont constituées chacune par un faisceau de crayons déplaçables dans des tubes guides équipant un assemblage combustible, chaque crayon contenant du matériau fertile constitué par un mélange intime d'uranium appauvri en isotopes 235 et de thorium, la teneur en uranium par rapport à l'ensemble de l'uranium et du thorium étant comprise entre 5 et 20% en poids. La teneur en uranium appauvri sera choisie en fonction de divers paramètres, notamment le taux d'irradiation atteint lors de l'extraction des barres de variation de spectre, l'appauvrissement de l'uranium utilisé et la dégradation du plutonium recherchée.

L'invention sera mieux comprise à la lecture de la description qui suit d'un mode particulier de réalisation, donné à titre d'exemple non limitatif, et de la comparaison qui en est faite avec l'art antérieur.

On décrira l'invention dans son application à un réacteur nucléaire modéré et refroidi par de l'eau sous pression, qui peut avoir la constitution générale décrite dans le document FR-A 2 535 508. Le cœur d'un tel réacteur est constitué d'assemblages combustibles juxtaposés reposant sur une plaque inférieure de cœur et surmontés par des équipements internes supérieurs. Chaque assemblage comporte un faisceau de crayons de combustible répartis aux nœuds d'un réseau régulier, qui peut être carré ou triangulaire. Dans le premier cas, l'assemblage aura généralement une section carrée, dans le second cas une section hexagonale. En certains des nœuds du réseau, les crayons de combustible sont remplacés par des tubes guides dans lesquels peuvent coulisser des crayons appartenant soit à des grappes de commande, soit à des grappes de variation de spectre, chaque grappe pouvant être considérée comme une barre. Les grappes sont déplaçables entre une position où les crayons sont insérés dans le cœur et une position où ils sont dans les internes superieurs par des mécanismes de commande placés dans des tubes sous pression traversant le couvercle de la cuve du réacteur. Dans un mode avantageux de réalisation, certains seulement des assemblages (un sur deux dans le cas du document FR-A 2 535 508) sont équipés à la fois d'une grappe de commande et d'une grappe de variation de spectre. Les tubes guides des autres assemblages sont fermés par des bouchons. Les mécanismes de commande peuvent être du genre décrit dans le document FR-A 2 537 764. Du fait qu'un assemblage sur deux seulement est équipé de grappes, on réduit notablement le nombre des pénétrations nécessaires.

Les crayons des grappes de commande contiennent un poison neutronique, c'est-à-dire un matériau donnant lieu à une absorption parasite de neutrons, sans émission de neutrons ou formation de matériau fissile. Les crayons des grappes à variation de spectre contiennent au contraire un matériau fertile, c'est-à-dire comportant une proportion élevée d'isotopes pouvant donner naissance à des noyaux fissiles par absorption de neutrons.

Le document FR-A 2 535 509 décrit un procédé d'exploitation d'un tel réacteur. Les crayons de combustible sont constitués par de l'uranium enrichi en isotope 235 de façon que le cœur présente une réactivité largement excédentaire lorsque le taux de modération est tel que les neutrons sont thermalisés. Les barres de variation de spectre de ce réacteur connu, barres constituées chacune par une grappe de crayons contenant de l'oxyde d'uranium appauvri en isotope 235 par rapport à la composition isotopique naturelle, sont maintenues dans le cœur pendant une première phase du cycle de fonctionnement, puis extraites.

Dans ces conditions, si le combustible contenu dans les crayons est initialement constitué par de l'oxyde d'uranium enrichi à 4,2% en poids d'U235, alors que les grappes de variation de spectre contiennent de l'oxyde d'uranium ayant une teneur de 0,2% en U235, le taux d'irradiation du matériau fertile lors du déchargement des grappes est d'environ 10 000 MWJ/T. Le rapport du nombre de noyaux de Pu239 par rapport au nombre de noyaux de U238 initial est de 0,7%. La composition isotopique après irradiation, exprimée en pourcentage du nombre total de noyaux lourds dans l'état final du matériau combustible, est la suivante:

Tableau I

| | | | |
|---|---|---|---|
| U235 | 0,1% | Pu238 | 0,4% |
| U236 | | Pu239 | 70,2% |
| U238 | 99,9% | Pu240 | 15,0% |
| | | Pu241 | 12,0% |
| | | Pu242 | 2,4% |
| Uranium | | Plutonium | |

On voit que le plutonium ainsi formé, séparable de l'uranium par voie chimique, comporte une proportion élevée de plutonium 239.

Conformément à l'invention, on dégrade la qualité de ce plutonium en augmentant sa richesse en isotopes de bout de chaîne 241 et 242 aux dépens de l'isotope 239 en constituant le matériau fertile par un mélange d'uranium et de thorium.

Il est important de relever que cette modification de la constitution des grappes fertiles ne change pas sensiblement les caractéristiques du combustible fissile après une irradiation moyenne de 25 000 MWJ/T au bout de laquelle on extrait les grappes de variation de spectre du combustible. Mais on modifie la composition isotopique dans le matériau fertile. Dans le cas où ce matériau fertile est constitué d'un mélange de 10% d'oxyde d'uranium, encore appauvri à 0,2%, dispersé dans 90% d'oxyde de thorium, les compositions isotopiques sont les suivantes après une irradiation de 10 000 MWJ/T du matériau fertile:

**Tableau II**

| Uranium | | Plutonium | |
|---|---|---|---|
| U233 | 11,8% | Pu238 | 0,2% |
| U235 | 0,3% | Pu239 | 65,2% |
| U234 | 1,3% | Pu240 | 13,4% |
| U236 | | Pu241 | 16,6% |
| U238 | 86,6% | Pu242 | 4,6% |

On constate que la teneur en plutonium 239 est descendue à 65,2%. Corrélativement, la teneur en Pu241 et Pu242 passe de 14,4% (tableau I) à 21,2%. L'augmentation du pourcentage de plutonium 241 n'est, paradoxalement, pas gênante puisque celui-ci au cours du temps se transforme en americium 241 qui est un poison à forte section d'absorption et qui empêche de ce fait tout stockage à long terme du plutonium. De plus, la quantité de plutonium qui est susceptible d'être extrait d'un crayon a notablement diminué puisque le rapport entre le nombre de noyaux de Pu239–Pu241 et le nombre de noyaux lourds initiaux (U, Th) passe de 0,8% à 0,2%.

La dégradation du plutonium peut d'ailleurs être encore accrue en diminuant encore la teneur en uranium appauvri.

Cette dégradation est sans inconvénient d'autant plus que la diminution de la teneur en uranium appauvri présente l'avantage de réduire l'autoprotection de l'uranium 238, ce qui augmente le taux de conversion de U238 en Pu239. Ce dernier atteint, dans l'exemple donné plus haut, 1,9%, au lieu de 0,7% dans le cas d'uranium appauvri utilisé seul.

Enfin, on constate également que la teneur des crayons de variation de spectre en isotopes fissiles de l'uranium (essentiellement U233) reste suffisamment faible pour ne pas créer de risque de prolifération.

La comparaison ci-dessus concerne un matériau fertile constitué d'uranium appauvri ou d'un mélange d'uranium appauvri et de thorium à un taux d'irradiation de 10 000 MWJ/T environ ce qui correspond à un temps de séjour de deux cycles cœur.

A un taux d'irradiation de 1000 MWJ/T la composition isotopique du plutonium dans les deux types de matériaux serait:

**Tableau III**

| | Uranium appauvri | Uranium (10%) Thorium (90%) |
|---|---|---|
| Pu238 | 0,07% | 0,05% |
| Pu239 | 91,79% | 85,64% |
| Pu240 | 6,42% | 9,46% |
| Pu241 | 1,66% | 4,55% |
| Pu242 | 0,06% | 0,30% |

Dans le cas de matériau constitué d'un mélange de thorium et d'uranium, la diminution de la teneur en uranium appauvri présente l'avantage de réduire l'auto-protection de l'uranium 238 ce qui augmente le taux de conversion de U238 en Pu239 et accélère donc la dégradation de celui-ci. De ce fait, à un taux d'irradiation faible, comparativement à un matériau fertile constitué d'oxyde d'uranium appauvri seul, la teneur en Pu239 passe de 91,8 à 85,6% et celle en Pu241 et Pu242 de 1,7% à 4,9%. La dégradation du plutonium est alors suffisamment rapide pour ne pas créer de risque de prolifération.

Dans la pratique, la teneur minimum en uranium appauvri utilisable pour la mise en œuvre de l'invention sera celle nécessaire pour que le rapport isotopique U233/U238 dans les crayons de variation de spectre n'atteigne pas des valeurs trop élevées ce qui se traduit par le fait que la teneur en uranium appauvri doit dépasser 2%.

4

Les barres de variation de spectre peuvent également contenir une très faible teneur en poison consommable destiné à absorber, au cours d'une faible fraction initiale de fonctionnement, la réactivité excédentaire du cœur.

**Revendications**

1. Procédé d'exploitation d'un réacteur nucléaire modéré et refroidi par de l'eau légère comportant un cœur constitué par des assemblages combustibles équipés de tubes guidés et plongés dans l'eau légère dont on effectue le remplacement au moins partiel à des intervalles de temps déterminés, correspondant à des cycles de fonctionnement du réacteur, dans lequel on introduits dans certains au moins des tubes guidés des barres de variation du spectre d'énergie des neutrons à l'intérieur du cœur, barres constituées en un matériau essentiellement fertile absorbant les neutrons, dans une première phase du cycle de façon à diminuer le rapport entre le volume de modérateur et le volume de matériau fissile dans le cœur et à déplacer le spectre d'énergie des neutrons vers les hautes énergies, et dans lequel on extrait desdits tubes guides les barres de déplacement du spectre dans une seconde phase du cycle, caractérisé en ce que ledit matériau fertile des barres de variation du spectre comprend un mélange de thorium et d'uranium appauvri, dont la teneur en uranium par rapport à l'ensemble de l'uranium et du thorium est comprise entre 5 et 20% en poids.

2. Procédé selon la revendication 1, caractérisé en ce que la teneur en uranium est d'environ 10% en poids.

3. Procédé selon la revendication 1 ou 2, caractérisé en ce que l'uranium appauvri a une teneur résiduelle en U235 de 0,2%, alors que le matériau contenu dans les assemblages combustible est de l'uranium enrichi à 4,2% en poids d'uranium 235, éventuellement remplacé pour partie par du plutonium.

4. Réacteur permettant de mettre en œuvre un procédé suivant la revendication 1, caractérisé en ce que les barres de variation du spectre sont constituées chacune par un faisceau de crayons déplaçables dans des tubes guides équipant un assemblage combustible, chaque crayon contenant du matériau fertile constitué par un mélange intime d'uranium appauvri en isotope 235 et de thorium, la teneur en uranium par rapport à l'ensemble de l'uranium et du thorium étant comprise entre 5 et 20% en poids.

5. Réacteur selon la revendication 4, caractérisé en ce que l'uranium et le thorium sont à l'état de pastilles frittées d'oxydes d'uranium et de thorium.

6. Réacteur selon la revendication 4 ou 5, caractérisé en ce que les barres de variation de spectre sont constituées par des grappes de crayons déplaçables dans des tubes guides d'un assemblage équipé de la grappe entre une position basse où les crayons sont insérés dans le cœur et une position où ils sont dans les internes supérieurs.

7. Réacteur selon la revendication 6, caractérisé en ce qu'au moins un assemblage du cœur sur deux est équipé à la fois d'une grappe de commande et d'une grappe de variation de spectre.

**Patentansprüche**

1. Verfahren zum Betreiben eines mit leichtem Wasser gekühlten und moderierten Kernreaktors mit einem Reaktorkern, der aus Brennelementkassetten besteht, die mit Führungsrohren versehen und in das leichte Wasser eingetaucht sind, das zumindest teilweise in bestimmten Zeitintervallen ausgetauscht wird, wobei die Zeitintervalle den Betriebszyklen des Reaktors entsprechen und wobei in mindestens einige der Führungsrohre Stäbe zur Veränderung des Neutronenenergiespektrums im Inneren des Reaktorkerns eingeführt werden, wobei die Stäbe aus einem im wesentlichen brütbaren Material bestehen, das in einer ersten Phase des Zyklus Neutronen absorbiert, um das Verhältnis zwischen dem Moderatorvolumen und dem Volumen des Spaltmaterials im Kern zu verringern und um das Neutronenenergiespektrum zu hohen Energien zu verschieben und wobei man in einer zweiten Phase des Zyklus die Stäbe zur Verschiebung des Spektrums aus den Führungsrohren herauszieht, dadurch gekennzeichnet, daß das brütbare Material der Stangen zur Änderung des Spektrums eine Mischung aus Thorium und entreichertem Uran aufweist, dessen Urangehalt im Verhältnis zur Gesamtmenge des Urans und des Thoriums zwischen 3 und 20 Gew.-% liegt.

2. Verfahren nach Anspruch 1, dadurch gekennzeichnet, daß der Urangehalt etwa 10 Gew.-% beträgt.

3. Verfahren nach Anspruch 1 oder 2, dadurch gekennzeichnet, daß das entreicherte Uran einen Restgehalt an U235 von 0,2% hat, während das Material, das in den Brennelementkassetten enthalten ist, angereichertes Uran mit 4,2 Gew.-% Uran 235 ist, das gegebenenfalls teilweise durch Plutonium ersetzt ist.

4. Kernreaktor zur Durchführung des Verfahrens nach Anspruch 1, dadurch gekennzeichnet, daß die Stäbe zur Veränderung des Spektrums jeweils aus einem verschiebbaren Stabbündel in den Führungsrohren bestehen, mit denen eine Brennelementkassette ausgerüstet ist, wobei jeder Stab brütbares Material enthält, das aus einer innigen Mischung aus entreichertem Uran Isotopen 235 und Thorium besteht, wobei der Urangehalt im Verhältnis zur Gesamtheit des Urans und des Thoriums zwischen 5 und 20 Gew.-% liegt.

5. Reaktor nach Anspruch 4, dadurch gekennzeichnet, daß das Uran und das Thorium in Form von frittierten Pellets aus Uranoxid und Thoriumoxid vorliegt.

5

EP 0 231 710 B1

6. Reaktor nach Anspruch 4 oder 5, dadurch gekennzeichnet, daß die Stäbe zur Veränderung des Spektrums aus Stabbündeln bestehen, die in einer mit einem solchen Bündel versehenen Brennelementkassette verschiebbar sind zwischen einer unteren Position, wo die Stäbe in den Kern eingeführt sind und einer Position, indem diese sich in dessen oberen Bereichen befinden.

7. Reaktor nach Anspruch 6, dadurch gekennzeichnet, daß mindestens jede zweite Brennelementkassette des Kerns gleichzeitig mit einem Steuerstabbündel und einem Bündel zur Veränderung des Spektrums ausgerüstet ist.

## Claims

1. A process of operating a ligth water moderated and cooled reactor comprising a core constituted by fuel assemblies provided with guide tubes and immersed in the light water, part at least of said assemblies being replaced at predetermined time intervals corresponding to operating cycles of the reactor, wherein bars for modifying the neutron energy spectrum in the core are introduced within some at least of the guide tubes, said bars containing predominantly fertile neutron-absorbing material, during a first phase of the cycle, for decreasing the ratio between the moderator volume and the fissile material volume in the core and shifting the neutron energy spectrum toward higher energies and wherein said spectrum variation bars are out of said guide tubes during a second phase of the cycle, characterized in that said fertile material in the spectrum variation bars comprises a mixture of thorium and depleted uranium, the content of uranium with respect to the amount of uranium and thorium being of from 5 to 20% by weight.

2. Process according to claim 1, characterized in that the uranium content is about 10% wt.

3. Process according to claim 1 or 2, characterized in that the depleted uranium has a residual U235 content of 0.2% while the material in the fuel assemblies is enriched uranium having 4.2% wt of uranium 235, possibly partly replaced with plutonium.

4. Reactor suitable for carrying out a process according to claim 1, characterized in that the spectrum variation bars each consist of a cluster of rods movable within guide tubes of a fuel assembly, each rod containing fertile material consisting of an intimate mixture of U235-depleted uranium and of thorium, the uranium content with respect to the amount of uranium and thorium being from 5 to 20% by weight.

5. Reactor according to claim 4, characterized in that uranium and thorium are present as sintered pellets of uranium and thorium oxides.

6. Reactor according to claim 4 or 5, characterized in that the spectrum variation bars consist of clusters of rods movable, within guide tubes of an assembly provided with said cluster, between a lower position where the rods are within the core and a position where they are within the upper internals.

7. Reactor according to claim 6, characterized in that at least one assembly of the core out of two is provided with a control cluster and with a spectrum variation cluster.